# EUROPEAN PATENT SPECIFICATION

(11) **EP 0 457 573 B1**
(45) Date of publication and mention of the grant of the patent: **23.08.1995**
(21) Application number: 91304366.7
(22) Date of filing: 15.05.1991
(51) Int. Cl.: G11B 7/13, G11B 7/135, G11B 7/125

(54) **Optical head**
Optischer Kopf
Tête optique

(30) Priority: 15.05.1990 JP 125139/90
(43) Date of publication of application: 21.11.1991
(73) Proprietor: SHARP KABUSHIKI KAISHA, Osaka 545 (JP)
(72) Inventor: Miyake, Takahiro, Tenri-shi, Nara-ken (JP); Yoshida, Yoshio, Tenri-shi, Nara-ken (JP); Kurata, Yukio, Tenri-shi, Nara-ken (JP); Sato, Hideaki, Yamatokoriyama-shi, Nara-ken (JP)
(74) Representative: Brown, Kenneth Richard

(56) References cited:
- EP-A- 0 311 463
- EP-A- 0 315 744
- EP-A- 0 320 276
- GB-A- 2 205 678

## Description

### FIELD OF THE INVENTION

The present invention relates to an optical head for use in optical data reproduction apparatus adapted for reading data from read-only type optical disks such as so-called compact disks, laser disks, etc., and in optical data recording/reproduction apparatus adapted for recording and reading data on/from Direct Read After Write (DRAW) type or rewritable type optical disks.

### BACKGROUND OF THE INVENTION

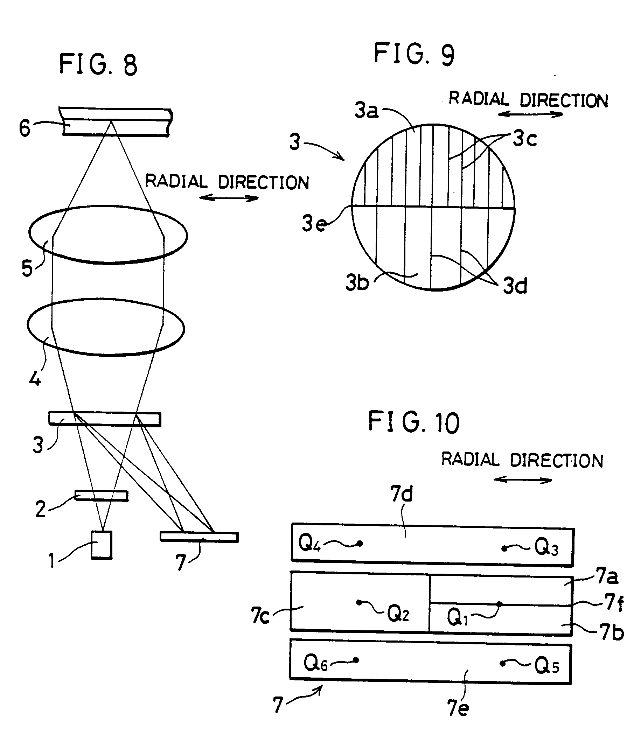

Fig. 8 shows an example of an optical head used in conventional optical data reproduction apparatus and optical data recording/reproduction apparatus.

A light beam is projected from a semiconductor laser 1, diffracted in a diffracting element 2 and split into a zero-order diffracted light (main beam) and ±1 order diffracted lights (a pair of sub beams). In Fig. 8, the ±1 order diffracted lights are comprised in a plane orthogonal to the surface of the paper.

The main beam and the sub beams are further diffracted in a diffracting element 3. Zero-order diffracted lights respectively produced by the main beam and the sub beams are transmitted through a collimating lens 4 to be focused onto a recording medium 6 by an objective lens 5.

Return lights reflected off the recording medium 6 pass through the objective lens 5 and the collimating lens 4, and are diffracted in the diffracting element 3. First order diffracted lights are then directed onto a light receiving element 7 from which data signal, tracking error signal and error focus signal can be obtained.

When, for example, data is recorded in the form of physical pits on the disc-shaped recording medium 6, the data is read out by focusing the zero order diffracted light produced by the main beam in the diffracting element 3 on the physical pits. The return light of the zero order diffracted light is diffracted again in the diffracting element 3 to produce first order diffracted lights. The data signal is derived from the intensity of these first order diffracted lights.

The zero order diffracted lights produced by the two sub beams in the diffracting element 3 are focused on positions symmetrical with respect to the zero order diffracted light produced by the main beam in the diffracting element 3. These positions are offset greatly in a track direction and offset slightly in a radial direction from the position on the recording medium 6 where the zero order diffracted light of the main beam is focused. The return lights are respectively diffracted in the diffracting element 3 to produce first order diffracted lights. The tracking error signal is derived from the intensities of these first order diffracted lights.

Fig. 9 shows the diffracting element 3 as seen from the recording medium 6. As shown in Fig. 9, the diffracting element 3 is divided into two diffracting regions 3a and 3b that are delineated by a division line 3e and whereon gratings 3c and 3d are respectively formed. The gratings 3c and 3d have mutually different pitches and the directions thereof are orthogonal to the division line 3e. Here, the direction of the division line 3e is set so as to coincide with the radial direction of the recording medium 6.

As shown in Fig. 10, the light receiving element 7 is divided into five light receiving regions 7a to 7e.

When the light beam projected from the semiconductor laser 1 is precisely focused on the recording medium 6, a portion of the return light corresponding to the zero order diffracted light produced by the main beam in the diffracting element 3, is diffracted in the diffracting region 3a of the diffracting element 3 to produce a first order diffracted light. This first order diffracted light is focused on a division line 7f separating the light receiving regions 7a and 7b, to form a spot-shaped diffracted image Q₁. Another portion of the return light corresponding to the zero order diffracted light of the main beam produced in the diffracting element 3, is diffracted in the diffracting region 3b of the diffracting element 3 to produce a first order diffracted light. This first order diffracted light is focused on the light receiving region 7c to form a spot-shaped diffracted image Q₂. The return lights corresponding to the zero order diffracted lights produced by the two sub beams in the diffracting element 3, respectively form two spot-shaped diffracted images Q₃ and Q₄ and two spot-shaped diffracted images Q₅ and Q₆ on the light receiving regions 7d and 7e.

Supposing that S_{1ₐ} to S_{1ₑ} respectively represent output signals released from the light receiving regions 7a to 7e, the focus error signal may be obtained by calculating (S_{1ₐ} - S_{1_{b}}). The tracking error signal may be obtained by calculating (S_{1_{d}} - S_{1ₑ}) and the data signal may be obtained by calculating (S_{1ₐ} + S_{1_{b}} + S_{1_{c}}).

An optical head of the type described above with reference to Fig. 8 through Fig. 10 is known from EP-A-0 320 276.

However, in a conventional system, the light beam projected from the semiconductor laser 1 is split into a main beam and two sub beams in the diffracting element 2 whereby the light intensity of the main beam is lower than that of the original light beam. Therefore, when the recording medium 6 employed is of a recordable type such as a Direct Read After Write type disk, a rewritable disk, etc., and the main beam is used to perform recording, it is difficult to provide a sufficient light intensity.

A drop in the light intensity of the main beam causes the amount of light received by the light receiving element 7 to decrease. As a result, the detection of the data signal and the focus error signal becomes difficult whereby the recording and reproduction of data cannot be performed accurately.

In order to prevent the light intensity of the main beam from decreasing, an alternative optical head that does not include the diffracting element 2 and where sub beams are not generated, can be adopted.

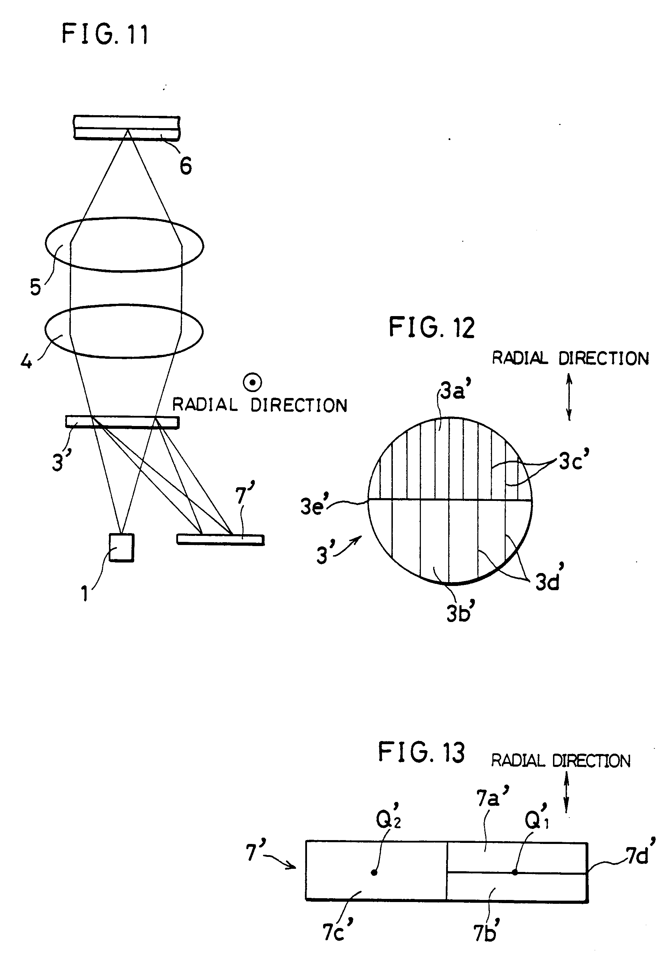

As shown in Fig. 11, with such an optical head, the light beam projected from the semiconductor laser 1 passes through the collimating lens 4 and the objective lens 5 and is focused at a point on the recording medium 6. The tracking error signal is derived from the light intensity distribution of the return light reflected off the recording medium 6.

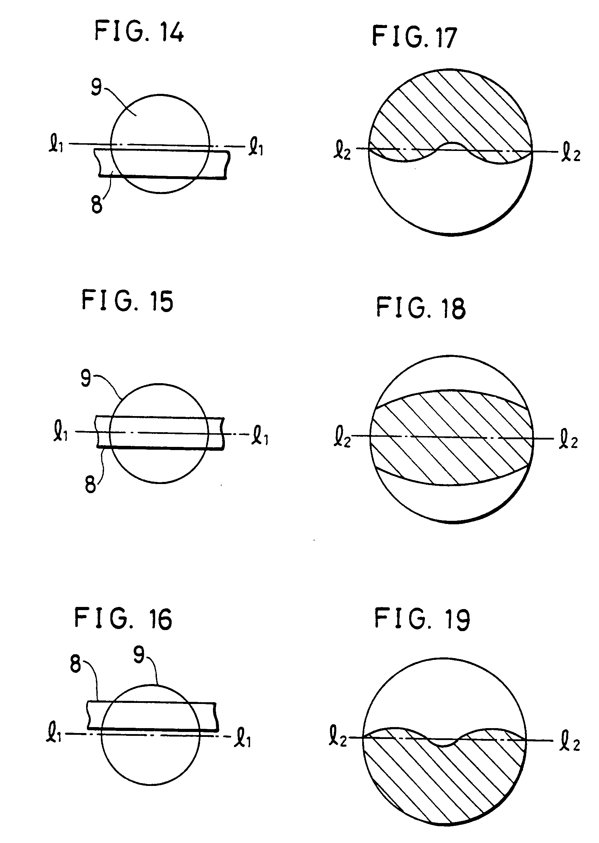

Namely, as illustrated in Fig. 15, the light beam is converged by the objective lens 5 and forms a light spot 9 on the recording medium 6. When the light spot 9 is centralized on a track 8, the light intensity distribution of the return light is symmetrical at both sides of a center line ℓ₂ - ℓ₂, as illustrated in Fig. 18. In Fig. 18, the section represented by hatching indicates sections having a low light intensity, and the center line ℓ₂ - ℓ₂ corresponds to a center line ℓ₁ - ℓ₁ of the light spot 9 shown in Fig. 15.

On the other hand, when, as shown in Figs. 14 and 16, the light spot 9 is formed in a position displaced inwards or outwards from the center of the track 8, the light intensity distribution of the return light is not symmetrical at both sides of the center line ℓ₂ - ℓ₂, as shown in Figs. 17 and 19.

As shown in Fig. 12, in order to obtain the tracking error signal, provision is made such that a division line 3e′ of a diffracting element 3′ coincides with the track direction, i.e., is orthogonal to the radial direction.

As shown in Fig. 13, a light receiving element 7′ is divided into three light receiving regions 7a′ to 7c′.

A portion of the return light is diffracted in the diffracting region 3a′ of the diffracting element 3′ to produce a first order diffracted light. This first order diffracted light is focused on a division line 7d′ separating the light receiving regions 7a′ and 7b′ to form a spot-shaped diffracted image Q₁′. Another portion of the return light is diffracted in the diffracting region 3b′ of the diffracting element 3′ and a first order diffracted light thereof is focused on the light receiving region 7c′ to form a spot-shaped diffracted image Q₂′.

Supposing that S_{2ₐ} to S_{2_{c}} respectively represent output signals released from the light receiving regions 7a′ to 7c′, the focus error signal may be obtained by calculating (S_{2ₐ} - S_{2_{b}}). The tracking error signal may be obtained by calculating (S_{2ₐ} + S_{2_{b}}) - S_{2_{c}} and the data signal may be obtained by calculating (S_{2ₐ} + S_{2_{b}} + S_{2_{c}}).

However, it is difficult to obtain an accurate focus error signal with the optical head arranged as described above.

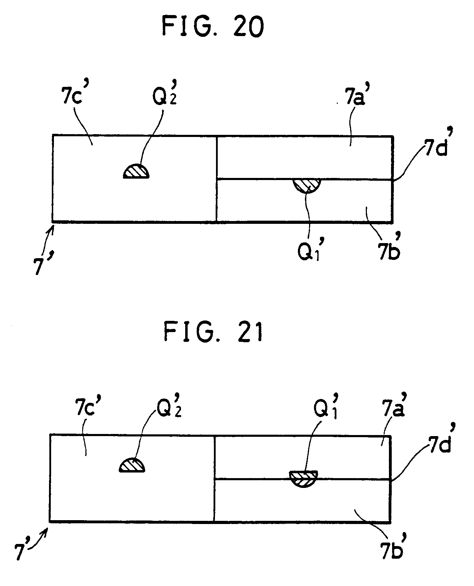

That is, when the light beam is precisely focused on the recording medium 6, the diffracted images Q₁′ and Q₂′ formed on the light receiving element 7′ are in theory spots. However in practice, due to differences in the performance of various optical members, tolerance at the time of assembly of the optical system or differences in the oscillation wavelength of the semiconductor laser 1, the diffracted images Q₁′ and Q₂′ spread to a certain extent, as shown in Fig. 20. This causes an offset to occur in the focus error signal when the focus is correct.

Here, in order to prevent the occurrence of an offset, one might consider to finely adjust the diffracting element 3′ so that, as shown in Fig. 21, the diffracted image Q₁′ is equally distributed in the light receiving regions 7a′ and 7b′. In other words, provision is made such that the light amounts respectively received by the light receiving regions 7a′ and 7b′ are equal.

However, as was discussed above, when the position of the light spot 9 is displaced from the center of the track 8, the light intensity distribution of the return light is not symmetrical at both sides of the center line ℓ₂ - ℓ₂, as shown in Figs. 17 and 19. As a result, the light intensity distribution of the return light impinging upon the diffracting element 3′ is also uneven causing the light intensity distribution of the diffracted image Q₁′ to vary and the light amounts respectively received by the light receiving regions 7a′ and 7b′ to differ. A conventional optical head therefore presents the disadvantage that in the case of a tracking error, an offset occurs in the focus error signal even when the focus is correct thereby impeding an accurate focus adjustment.

### SUMMARY OF THE INVENTION

An object of the present invention is to provide an optical head capable of accurately detecting a focus error even in the case that a tracking error occurs.

The present invention provides an optical head for projecting a light spot onto a recording medium, comprising:
a diffracting element for receiving light reflected from the recording medium, the diffracting element being divided into a focus detection portion and a tracking detection portion at a first division line extending in a direction corresponding to a direction on the recording medium transverse the track direction and the tracking detection portion being divided into tracking sub-portions at a second division line extending in a direction corresponding to said track direction; and
a light receiving element including a focus light receiving portion for receiving the reflected light portion diffracted by said focus detection portion and two tracking light receiving portions for receiving the respective reflected light portions diffracted by said tracking detection sub-portions, the focus light receiving portion being divided along a division line which extends in a direction corresponding to the direction of said first division line of the diffracting element, so that displacement of the reflected light beam due to tracking error causes movement of the light portion received by the focus light receiving portion in the direction of said division line thereof.

According to the present invention, a return light reflected off the recording medium impinges upon the diffracting element to produce diffracted lights. The diffracted lights produced in two tracking diffraction regions of the diffracting element are respectively received by two tracking light receiving regions of the light receiving element. Tracking error detection is executed by comparing output signals released from the tracking light receiving regions.

On the other hand, the diffracted light produced in a focusing diffracting region of the diffracting element is received by two adjoining focusing light receiving regions of the light receiving element. Focus error detection is executed by comparing output signals released from the focusing light receiving regions.

Here, the focusing diffracting region is separated from the tracking diffracting regions by a division line that extends in a direction corresponding to the direction orthogonal to that of the track direction of the recording medium. Such an arrangement enables the diffracted light produced in the focusing diffracting region to always have a substantially constant light intensity even in the case of a tracking error. Therefore, an offset may be prevented from occurring in the focus error signal by finely adjusting the diffracting element.

### BRIEF DESCRIPTION OF THE DRAWINGS

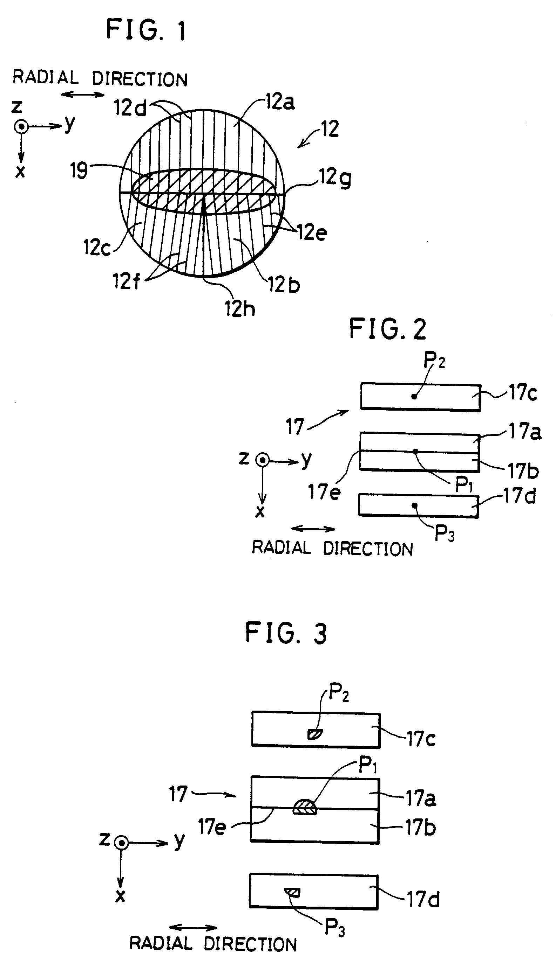

Fig. 1 through Fig. 6 illustrate a first embodiment of the present invention.

Fig. 1 is a schematic plan view illustrating a diffracting element.

Fig. 2 is a schematic plan view illustrating a light receiving element.

Fig. 3 is a schematic plan view illustrating how diffracted images spread on the light receiving element.

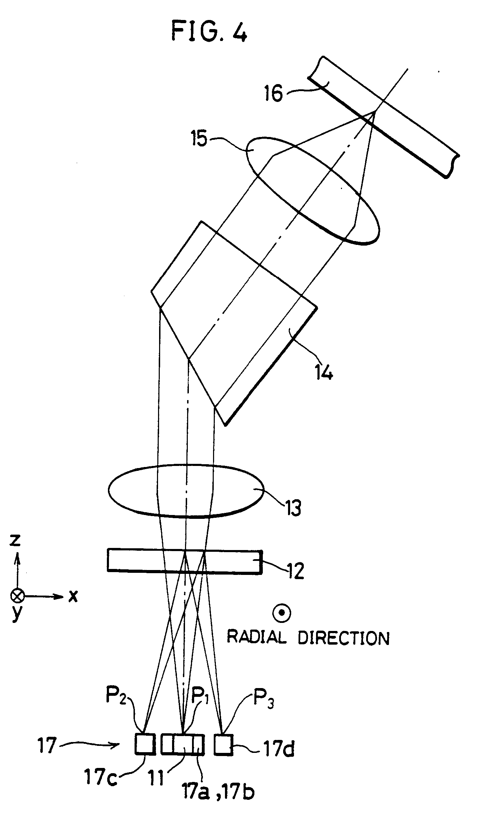

Fig. 4 is a schematic front view illustrating an optical head.

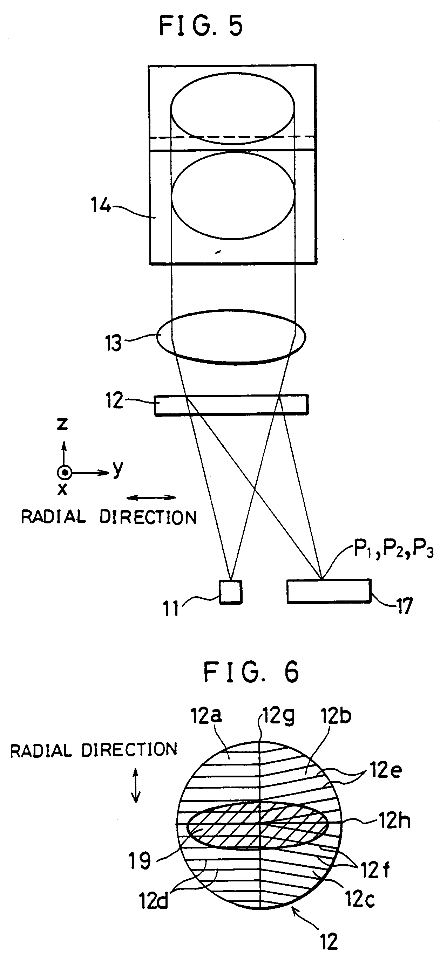

Fig. 5 is a schematic side view illustrating the optical head of Fig. 4.

Fig. 6 is a schematic plan view illustrating another diffracting element of this invention.

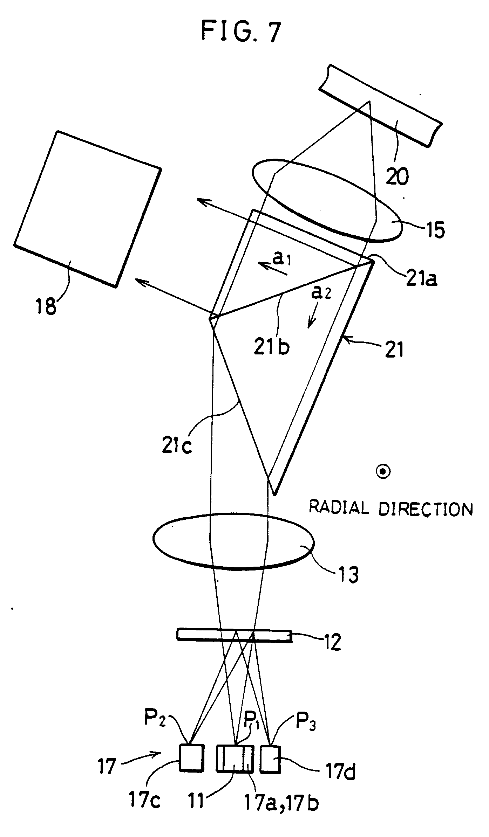

Fig. 7 is a schematic front view illustrating an optical head of a second embodiment of the present invention.

Fig. 8 through Fig. 10 illustrate a first conventional example.

Fig. 8 is a schematic front view illustrating an optical head.

Fig. 9 is a schematic plan view illustrating a diffracting element.

Fig. 10 is a schematic plan view illustrating a light receiving element.

Fig. 11 through Fig. 21 illustrate a second conventional example.

Fig. 11 is a schematic front view illustrating an optical head.

Fig. 12 is a schematic plan view illustrating a diffracting element.

Fig. 13 is a schematic plan view illustrating a light receiving element.

Fig. 14 through Fig. 16 are explanatory views respectively illustrating relative positions of a track and a light spot.

Fig. 17 through Fig. 19 are explanatory views respectively illustrating a light intensity distribution of a return light in accordance with the relative positions of the track and the light spot shown in Figs. 14 to 16.

Fig. 20 is a schematic plan view illustrating how diffracted images spread on the light receiving element.

Fig. 21 is a schematic plan view illustrating how diffracted images spread on the light receiving element when the diffracting element is finely adjusted.

### DESCRIPTION OF THE EMBODIMENTS

A first embodiment of the present invention will be described below with reference to Fig. 1 through Fig. 6.

As shown in Figs. 4 and 5, in an optical head of the present embodiment, a light beam is projected from a semiconductor laser 11 used as light source and is diffracted in a diffracting element 12. A zero order diffracted light passes through a collimating lens 13 (collimating means) where it converted from a diverging light into a collimated one, and impinges upon a shaping prism 14 (shaping means) thereafter. The shaping prism 14 is an optical component designed to improve the utilization efficiency of the power of the light beam and shapes a substantially elliptical light intensity distribution of the light beam projected from the semiconductor laser 11 into a substantially circular light intensity distribution. In the present embodiment, the light beam projected from the semiconductor laser 11 is expanded in a minor axis direction of the ellipse thereof (x direction in the figure) by the shaping prism 14.

After passing through the shaping prism 14, the light beam is focused on a recording medium 16 by an objective lens 15. The collimating lens 13, the shaping prism 14 and the objective lens 15 constitute an optical system.

Optical disks such as read-only type, Direct Read After Write type and rewritable disks may be adopted as the recording medium 16. Tracks (not shown in the figure) composed of aligned pits, guiding grooves or the like are formed on the recording medium 16.

A return light reflected off the recording medium 16 is converged by the objective lens 15. Thereafter the light intensity distribution thereof is changed back by the shaping prism 14 into a substantially elliptical shape whose minor axis coincides with the x direction. The shaped return light passes through the collimating lens 13 and is directed to the diffracting element 12. The return light is diffracted in the diffracting element 12 to produce diffracted lights that are then directed to a light receiving element 17.

As shown in Fig. 1, the diffracting element 12 as seen from the recording medium 16, is divided by division lines 12g and 12h into three diffracting regions 12a to 12c. Gratings 12d to 12f are respectively formed on the diffracting regions 12a to 12c.

The division line 12g extends in a y direction corresponding to a radial direction of the recording medium 16. The division line 12h starts from the center of the division line 12g and extends in the x direction orthogonal to the radial direction of the recording medium 16, i.e., in a track direction of the recording medium 16. The diffracting regions 12b and 12c (tracking diffracting regions) are designed such as to have mutually equal areas. In addition, provision is made such that the area of the diffracting region 12a (focusing diffracting region) is equal to the sum of the areas of the diffracting regions 12b and 12c. A cross section 19 formed by the return light impinging upon the diffracting element 12 has a substantially elliptical shape. In the present embodiment, a major axis (y direction) of the cross section 19 coincides with the direction of the division line 12g. In other words, the major axis of the return light corresponds to the radial direction of the recording medium 16.

Here, the radial direction is defined as a direction extending from the center of rotation of the recording medium 16 to a position where the light beam is irradiated on the recording medium 16. As for the track direction, it is defined as a direction on the recording medium 16 orthogonal to the radial direction. The direction corresponding to the radial direction is defined as a projection of the radial direction upon the diffracting element 12 while the direction corresponding to the track direction is defined as a projection of the track direction upon the diffracting element 12.

The grating 12d formed on the diffracting region 12a has a grating direction orthogonal to the division line 12g. A grating direction of the grating 12e formed on the diffracting region 12b and a grating direction of the grating 12f of the diffracting region 12c are inclined in mutually opposite directions with respect to the division line 12h. Here, the pitches of the gratings 12d to 12f and the inclination of the gratings 12e and 12f are respectively determined according to relative positions of the diffracting regions 12a to 12c and diffracted images P₁ to P₃, to be described later, formed on the light receiving element 17. In order to correct aberrations, grating lines of the gratings 12d and 12f can be designed, when necessary, so as to describe gradual curves.

As shown in Fig. 2, the light receiving element 17 is divided into four rectangular light receiving regions 17a to 17d. The light receiving regions 17a to 17d are aligned in the x direction corresponding to the track direction of the recording medium 16 and extend in the y direction corresponding to the radial direction of the recording medium 16. The two central light receiving regions 17a and 17b (focusing light receiving regions) are divided by a division line 17e. The division line 17e extends in the y direction corresponding to the radial direction of the recording medium 16. The light receiving regions 17c and 17d (tracking light receiving regions) are respectively separated in the x direction from the light receiving regions 17a and 17b by a predetermined interval.

When the light beam projected from the semiconductor laser 11 is precisely focused upon the recording medium 16, the diffracted light produced in the diffracting region 12a of the diffracting element 12 forms the spot-shaped diffracted image P₁ on the division line 17e. Meanwhile, the diffracted light produced in the diffracting region 12b forms the spot-shaped diffracted image P₂ on the light receiving region 17c and the diffracted light produced in the diffracting region 12c forms the spot-shaped diffracted image P₃ on the light receiving region 17d.

When there is no focus error, the diffracted image P₁ is equally distributed between the light receiving regions 17a and 17b, and ideally forms one spot on the division line 17e. On the other hand, when a focus error occurs, the diffracted image P₁ spreads on either the light receiving region 17a or the light receiving region 17b. Therefore, supposing that Sa to Sd respectively represent output signals released from the light receiving regions 17a to 17d, the focus error signal may be obtained through a single knife edge method by calculating (Sa - Sb). The tracking error signal is obtained by comparing the respective light amounts of the diffracted lights from the diffracting regions 12b and 12c divided by the division line 12h extending in the x direction corresponding to the track direction of the recording medium 16, and calculating (Sc - Sd) through a push-pull method. In addition, the data signal is obtained by calculating (Sa + Sb + Sc + Sd).

With the above configuration, tolerance of various components might cause the diffracted image P₁ to spread to a certain extent when the light beam projected from the semiconductor laser 11 is precisely focused on the recording medium 16. As shown in Fig. 3, in this case the diffracting element 12 should be finely adjusted so that the diffracted image P₁ is equally distributed between the light receiving regions 17a and 17b, i.e., so that the output signals Sa and Sb from the light receiving regions 17a and 17b are equal. Hence, in the present embodiment, even if the light intensity distribution of the return light impinging upon the diffracting element 12 varies due to a tracking error, this variation is in a direction parallel with the division line 12g. This enables the light amounts respectively received by the light receiving regions 17a and 17b whereon the diffracted image P₁ is formed by the diffracted light from the diffracting region 12a, to stay unchanged in spite of the variation in the light intensity distribution of the return light. As a result, a tracking error does not cause an offset in the focus error signal whereby the focus error signal can be accurately detected.

Moreover, in the present embodiment, the light beam projected from the semiconductor laser 11 is directed onto the recording medium 16 without being split into a main beam and sub beams whereby the light intensity of the projected light is not lowered. Therefore, since the utilization efficiency of the projected light is high, the required light intensity can be readily ensured even when the recording medium 16 adopted is of a recordable type.

In the above embodiment, the diffracting element 12 was designed such that the area of the diffracting region 12a and the sum of the respective areas of the diffracting regions 12b and 12c are equal. However, the area of the diffracting region 12a and the sum of the respective areas of the diffracting regions 12b and 12c do not necessarily have to be equal. In addition, since the return light directed onto the diffracting element 12 has a substantially elliptical light intensity distribution, the diffracting element 12 may also be designed accordingly in an elliptical shape.

In the above embodiment, the direction (y direction) of the major axis of the cross section 19 of the return light directed onto the diffracting element 12, corresponds to the radial direction of the recording medium 16. As shown in Fig. 6, in the case that the major axis of the cross section 19 of the return light directed onto the diffracting element 12, corresponds to the direction orthogonal to the radial direction of the recording medium 16 (track direction), the diffracting element 12 of the above embodiment should be rotated by 90°. In addition, the light receiving element 17 of the above embodiment whose position is determined according to the semiconductor laser 11, should be rotated by 90°.

A second embodiment of the present invention will be discussed hereinafter with reference to Fig. 7. Here, the components having the same function as components shown in the figures of the aforementioned embodiment will be designated by the same reference and their description will be omitted.

An optical head of the present embodiment is incorporated into a recording/reproducing apparatus for magneto-optical disk. A significant difference between the configuration discussed in the first embodiment and that of the present embodiment lies in the fact that, instead of the shaping prism 14 (see Fig. 4), the present embodiment adopts a polarizing beam splitter 21 (polarizing element) having a light beam shaping function. The polarizing beam splitter 21 is designed such that surfaces 21a and 21c whereon light impinges or wherefrom light exits, are not parallel but form an intersection having a predetermined angle to shape the light beam cross section.

A light beam is projected from a semiconductor laser 11, passes through a diffracting element 12 and a collimating lens 13 and is directed onto the polarizing beam splitter 21 where the substantially elliptical light intensity distribution thereof is shaped into a substantially circular light intensity distribution. Thereafter, the light beam is focused onto a magneto-optical disk 20 adopted as recording medium by means of an objective lens 15.

A polarization plane of a return light reflected off the magneto-optical disk 20 is rotated through a magnetic Kerr effect. Namely, the polarization plane of the return light is rotated in mutually opposite directions depending on whether the magnetization of a magnetic domain formed on the magneto-optical disk 20 and constituting a unit adopted for recording data, is oriented upward or downward.

The return light passes through the objective lens 15 and impinges upon the surface 21a of the polarizing beam splitter 21. A polarized component containing a data component of the return light whose polarization plane was rotated and modulated, is reflected off a boundary surface 21b at right angles (a₁ direction in the figure) and is directed to an optical system for data signal detection 18.

Meanwhile, another polarized component of the return light, i.e., the polarized component that does not contain the data component, is transmitted through the boundary surface 21b in a direction a₂. After the substantially circular light intensity distribution thereof is shaped back into a substantially elliptical light intensity distribution at the surface 21c of the polarizing beam splitter 21, the transmitted polarized component passes through the collimating lens 13 and is directed onto the diffracting element 12.

The configurations of the diffracting element 12 and of a light receiving element 17 are analogous to those discussed in the first embodiment. The return light impinging upon the diffraction element 12 is diffracted in diffracting regions 12a to 12c (not shown in Fig. 7) to produce diffracted lights that are then directed onto the light receiving element 17. A focus error signal and a tracking error signal are obtained in the same manner as in the first embodiment. In the present embodiment, the detection of the data signal is performed in the optical system for data signal detection 18 and not in the light receiving element 17.

The polarizing beam splitter 21 adopted in the optical head of the present embodiment, possesses a light beam shaping function whereby the implementation of a shaping prism is not necessary. This enables the design of a compact and light optical head for use with a recording/reproducing apparatus for magneto-optical disk. Other functions and effects of the optical head of the present embodiment are similar to those discussed in the previous embodiment.

The invention may be embodied in other specific forms without departure from the scope of the invention, as defined by the following claims.

## Claims

1. An optical head for projecting a light spot onto a recording medium (16;20), comprising:
a diffracting element (12) for receiving light reflected from the recording medium, the diffracting element being divided into a focus detection portion (12a) and a tracking detection portion (12b,12c) at a first division line (12g) extending in a direction corresponding to a direction on the recording medium transverse the track direction and the tracking detection portion being divided into tracking sub-portions (12b,12c) at a second division line (12h) extending in a direction corresponding to said track direction; and
a light receiving element (17) including a focus light receiving portion (17a,17b) for receiving the reflected light portion (P₁) diffracted by said focus detection portion (12a) and two tracking light receiving portions (17c,17d) for receiving the respective reflected light portions (P₂,P₃) diffracted by said tracking detection sub-portions, the focus light receiving portion (17a,17b) being divided along a division line (17e) which extends in a direction corresponding to the direction of said first division line (12g) of the diffracting element (12), so that displacement of the reflected light beam due to tracking error causes movement of the light portion (P₁) received by the focus light receiving portion (17a,17b) in the direction of said division line (17e) thereof.

2. An optical head as defined in claim 1, comprising:
a light source (11);
focusing means (15) for focusing a light projected from the light source onto a recording medium (16; 20);
said diffracting element (12) for diffracting a return light reflected off the recording medium in a direction different to that of said light from the light source, said diffracting element being disposed in an optical path between the light source and the focusing means; and
said light receiving element (17) for receiving diffracted lights produced from the return light in the diffracting element to detect a focusing error and a tracking error;
said diffracting element (12) including
two tracking diffracting regions (12b, 12c) separated by a division line (12h), said division line (12h) extending in a direction corresponding to a track direction of the recording medium, and
one focusing diffracting region (12a) separated from said tracking diffracting regions (12b, 12c) by another division line (12g) extending in a direction corresponding to a radial direction of the recording medium; and
said light receiving element (17) including
two tracking light receiving regions (17c, 17d) for respectively receiving the diffracted lights produced in the tracking diffracting regions (12b, 12c) of the diffracting element, and two mutually adjoining focusing light receiving regions (17a, 17b) for receiving the diffracted light produced in the focusing diffracting region (12a) of the diffracting element.

3. An optical head as defined in claim 2, further comprising collimating means (13) for converting the light projected from the light source (11) into a collimated light, said collimating means (13) being disposed in the optical path between the light source (11) and the focusing means (15).

4. An optical head as defined in claim 3, further comprising shaping means (14) for shaping a light intensity distribution of the light projected from the light source (11) into a substantially circular light intensity distribution, said shaping means (14) being disposed in an optical path between the collimating means (13) and the focusing means (15).

5. An optical head as defined in claim 2, further comprising:
a polarizing element (21b) for separating the return light reflected off the recording medium (20) into polarized components, said polarizing element (21) being disposed in an optical path between the diffracting element (12) and the focusing means (15); and
an optical system (18) for data signal detection for receiving one of the polarized components separated by the polarizing element to detect a data signal.

6. An optical head as defined in claim 5, further comprising collimating means (13) for converting the light projected from the light source (11) into a collimated light, said collimating means (13) being disposed in an optical path between the diffracting element (12) and the polarizing element (21).

7. An optical head as defined in claim 6, further comprising shaping means (21c) for shaping a light intensity distribution of the light projected from the light source (11) into a substantially circular light intensity distribution, said shaping means (21c) being disposed in an optical path between the collimating means (13) and the polarizing element (21b).

8. An optical head as defined in claim 7, wherein the polarizing element (21b) and the shaping means (21c) are formed integrally (21).

9. An optical head as defined in claim 2, wherein a direction of a boundary line (17e) separating the two mutually adjoining focusing light receiving regions (17a, 17b) of the light receiving element (17) is set so that said boundary line (17e) and an optical axis of the diffracted light produced in the focusing diffracting region (12a) of the diffracting element (12), are comprised in the same plane.

10. An optical head as defined in claim 2, wherein gratings (12e, 12f) respectively formed in the two tracking diffracting regions (12b, 12c) of the diffracting element (12), are inclined in mutually opposite directions with respect to the division line (12h) extending in the direction corresponding to the track direction.

## Patentansprüche

1. Optischer Kopf zum Aufstrahlen eines Lichtflecks auf ein Aufzeichnungsmedium (16; 20), mit:
- einem Beugungselement (12) zum Empfangen von am Aufzeichnungsmedium reflektiertem Licht, mit einer Unterteilung des Beugungselements in einen Fokuserfassungsbereich (12a) und einen Spurerfassungsbereich (12b, 12c) entlang einer ersten Trennlinie (12g), die sich in einer Richtung erstreckt, die einer quer zur Spurrichtung auf dem Aufzeichnungsmedium verlaufenden Richtung entspricht, wobei der Spurerfassungsbereich entlang einer zweiten Trennlinie (12h), die sich in einer der Spurrichtung entsprechenden Richtung erstreckt, in Spurunterbereiche (12b, 12c) unterteilt ist; und
- einem lichtempfangenden Element (17) mit einem Fokussierlicht empfangenden Bereich (17a, 17b) zum Empfangen desjenigen Lichtanteils (P₁), der durch den Fokuserfassungsbereich (12a) gebeugt wurde, und zwei Spurführungslicht empfangenden Bereichen (17c, 17d) zum Empfangen der jeweiligen reflektierten Lichtanteile (P₂, P₃), die von den Spurerfassungsunterbereichen gebeugt wurden, wobei der Fokussierlicht empfangende Bereich (17a, 17b) entlang einer Trennlinie (17e) unterteilt ist, die sich in einer der Richtung der ersten Trennlinie (12g) des Beugungselements (12) entsprechenden Richtung erstreckt, so daß eine Verschiebung des reflektierten Lichtstrahls wegen einer Spurabweichung eine Bewegung des vom Fokussierlicht empfangenden Bereich (17a, 17b) empfangenen Lichtanteils (P₁) in der Richtung dieser Trennlinie (17e) hervorruft.

2. Optischer Kopf nach Anspruch 1, mit:
- einer Lichtquelle (11);
- einer Fokussiereinrichtung (15), zum Fokussieren von von der Lichtquelle abgestrahltem Licht auf ein Aufzeichnungsmedium (16; 20);
- wobei das Beugungselement (12) zum Beugen von zurücklaufendem Licht, das am Aufzeichnungsmedium in einer Richtung abweichend von der des Lichts von der Lichtquelle reflektiert wird, im optischen Pfad zwischen der Lichtquelle und der Fokussiereinrichtung angeordnet ist; und
- dem lichtempfangenden Element (17) zum Empfangen von Beugungslichtstrahlen, die im Beugungselement aus dem zurücklaufenden Licht erzeugt wurden, um eine Fokusabweichung und eine Spurführungsabweichung zu erfassen;
- wobei das Beugungselement (12) folgendes beinhaltet:
-- zwei Spurführungs-Beugungsbereiche (12b, 12c), die durch eine Trennlinie (12h) voneinander getrennt sind, die sich in der der Spurrichtung des Aufzeichnungsmediums entsprechenden Richtung erstreckt; und
-- einen Fokussier-Beugungsbereich (12a), der durch eine andere Trennlinie (12g), die sich in der der radialen Richtung des Aufzeichnungsmediums erstreckt, von den SpurführungsBeugungsbereichen (12b, 12c) getrennt ist; und
- das lichtempfangende Element (17) folgendes beinhaltet:
-- zwei Spurführungslicht empfangende Bereiche (17c, 17d) zum jeweiligen Empfangen der in den Spurführungs-Beugungsbereichen (12b, 12c) des Beugungselements erzeugten gebeugten Lichtstrahlen; und
-- zwei aneinander angrenzende Fokussierungslicht empfangende Bereiche (17a, 17b) zum Empfangen der im FokussierungsBeugungsbereich (12a) des Beugungselements erzeugten Beugungslichtstrahlen.

3. Optischer Kopf nach Anspruch 2, ferner mit einer Kollimiereinrichtung (13) zum Umsetzen des von der Lichtquelle (11) erzeugten Lichts in kollimiertes Licht, die im optischen Pfad zwischen der Lichtquelle (11) und der Fokussiereinrichtung (15) angeordnet ist.

4. Optischer Kopf nach Anspruch 3, ferner mit einer Strahlformungseinrichtung (14) zum Formen der Lichtintensitätsverteilung des von der Lichtquelle (11) abgestrahlten Lichts in eine im wesentlichen kreisförmige Lichtintensitätsverteilung, die im optischen Pfad zwischen der Kollimiereinrichtung (13) und der Fokussiereinrichtung (15) angeordnet ist.

5. Optischer Kopf nach Anspruch 2, ferner mit:
- einem Polarisationselement (21b) zum Unterteilen des vom Aufzeichnungsmedium (20) reflektierten, zurücklaufenden Lichts in polarisierte Komponenten, das im optischen Pfad zwischen dem Beugungselement (12) und der Fokussiereinrichtung (15) angeordnet ist; und
- einem optischen System (18) für eine Datensignalerfassung zum Empfangen einer der durch das Polarisationselement abgetrennten polarisierten Komponenten, um ein Datensignal zu erfassen.

6. Optischer Kopf nach Anspruch 5, ferner mit einer Kollimiereinrichtung (13) zum Umsetzen des von der Lichtquelle (11) abgestrahlten Lichts in kollimiertes Licht, wobei diese Kollimiereinrichtung (13) im optischen Pfad zwischen dem Beugungselement (12) und dem Polarisationselement (21) angeordnet ist.

7. Optischer Kopf nach Anspruch 6, ferner mit einer Formungseinrichtung (21c) zum Formen der Lichtintensitätsverteilung des von der Lichtquelle (11) abgestrahlten Lichts in eine im wesentlichen kreisförmige Lichtintensitätsverteilung, und die im optischen Pfad zwischen der Kollimiereinrichtung (13) und dem Polarisationselement (21b) angeordnet ist.

8. Optischer Kopf nach Anspruch 7, bei dem das Polarisationselement (21b) und das Strahlformungselement (21c) als Einheit (21) ausgebildet sind.

9. Optischer Kopf nach Anspruch 2, bei dem die Richtung der Grenzlinie (17e), die die zwei aneinander angrenzenden Fokussierlicht empfangenden Bereiche (17a, 17b) des lichtempfangenden Elements (17) voneinander trennt, so ausgerichtet ist, daß diese Grenzlinie (17e) und die optische Achse des im Fokussier-Beugungsbereich (12a) des Beugungselements (12) erzeugten gebeugten Lichts in derselben Ebene liegen.

10. Optischer Kopf nach Anspruch 2, bei dem jeweils in den zwei Spurführungs-Beugungsbereichen (12b, 12c) des Beugungselements (12) ausgebildete Gitter (12e, 12f) in zueinander entgegengesetzten Richtungen in bezug auf die Trennlinie (12h) geneigt sind, die sich in der der Spurrichtung entsprechenden Richtung erstreckt.

## Revendications

1. Tête optique pour projeter un point de lumière sur un support d'enregistrement (16;20), comprenant :
un élément de diffraction (12) pour recevoir de la lumière réfléchie par le support d'enregistrement, l'élément de diffraction étant divisé en une portion de détection de foyer (12a) et une portion de détection de poursuite de piste (12b, 12c) au niveau d'une première ligne de division (12g) s'étendant dans une direction correspondant à une direction sur le support d'enregistrement transversale à la direction de piste et la portion de détection de poursuite de piste étant divisée en des sous-portions de poursuite de piste (12b, 12c) au niveau d'une seconde ligne de division (12h) s'étendant dans une direction correspondant à ladite direction de piste; et
un élément de réception de lumière (17) incluant une portion de réception de lumière de foyer (17a, 17b) pour recevoir la portion de lumière réfléchie (P₁) diffractée par ladite portion de détection de foyer (12a) et deux portions de réception de lumière de poursuite de piste (17c, 17d) pour recevoir les portions de lumière réfléchies respectives (P₂, P₃) diffractées par lesdites sous-portions de détection de poursuite de piste, la portion de réception de lumière de foyer (17a, 17b) étant divisée suivant une ligne de division (17e) qui s'étend dans une direction correspondant à la direction de ladite première ligne de division (12g) de l'élément de diffraction (12), de sorte qu'un déplacement du faisceau de lumière réfléchi dû à une erreur de poursuite de piste provoque un mouvement de la portion de lumière (P₁) reçue par la portion de réception de lumière de foyer (17a, 17b) dans la direction de ladite ligne de division (17e) de celle-ci.

2. Tête optique selon la revendication 1, comprenant:
une source de lumière (11);
des moyens de focalisation (15) pour focaliser une lumière projetée par la source de lumière sur un support d'enregistrement (16; 20);
ledit élément de diffraction (12) pour diffracter une lumière renvoyée, réfléchie par le support d'enregistrement, dans une direction différente de celle de ladite lumière provenant de la source de lumière, ledit élément de diffraction étant disposé dans un chemin optique entre la source de lumière et les moyens de focalisation; et
ledit élément de réception de lumière (17) pour recevoir des lumières diffractées produites à partir de la lumière renvoyée dans l'élément de diffraction afin de détecter une erreur de focalisation et une erreur de poursuite de piste;
ledit élément de diffraction (12) incluant
deux régions de diffraction de poursuite de piste (12b, 12c) séparées par une ligne de division (12h), ladite ligne de division (12h) s'étendant dans une direction correspondant à une direction de piste du support d'enregistrement, et
une région de diffraction de focalisation (12a) séparée desdites régions de diffraction de poursuite de piste (12b, 12c) par une autre ligne de division (12g) s'étendant dans une direction correspondant à une direction radiale du support d'enregistrement; et
ledit élément de réception de lumière (17) incluant
deux régions de réception de lumière de poursuite de piste (17c, 17d) pour recevoir respectivement les lumières diffractées produites dans les régions de diffraction de poursuite de piste (12b, 12c) de l'élément de diffraction, et
deux régions de réception de lumière de focalisation mutuellement attenantes (17a, 17b) pour recevoir la lumière diffractée produite dans la région de diffraction de focalisation (12a) de l'élément de diffraction.

3. Tête optique selon la revendication 2, comprenant également des moyens de collimation (13) pour convertir la lumière projetée par la source de lumière (11) en une lumière collimatée, lesdits moyens de collimation (13) étant disposés dans le chemin optique entre la source de lumière (11) et les moyens de focalisation (15).

4. Tête optique selon la revendication 3, comprenant également des moyens de mise en forme (14) pour mettre en forme une distribution d'intensité de lumière de la lumière projetée par la source de lumière (11) en une distribution d'intensité de lumière sensiblement circulaire, lesdits moyens de mise en forme (14) étant disposés dans un chemin optique entre les moyens de collimation (13) et les moyens de focalisation (15).

5. Tête optique selon la revendication 2, comprenant également:
un élément de polarisation (21b) pour séparer la lumière renvoyée, réfléchie par le support d'enregistrement (20), en des composantes polarisées, ledit élément de polarisation (21) étant disposé dans un chemin optique entre l'élément de diffraction (12) et les moyens de focalisation (15); et
un système optique (18) pour une détection de signal de données, afin de recevoir l'une des composantes polarisées séparées par l'élément de polarisation de façon à détecter un signal de données.

6. Tête optique selon la revendication 5, comprenant également des moyens de collimation (13) pour convertir la lumière projetée provenant de la source de lumière (11) en une lumière collimatée, lesdits moyens de collimation (13) étant disposés dans un chemin optique entre l'élément de diffraction (12) et l'élément de polarisation (21).

7. Tête optique selon la revendication 6, comprenant également des moyens de mise en forme (21c) pour mettre en forme une distribution d'intensité de lumière de la lumière projetée par la source de lumière (11) en une distribution d'intensité de lumière sensiblement circulaire, lesdits moyens de mise en forme (21c) étant disposés dans un chemin optique entre les moyens de collimation (13) et l'élément de polarisation (21b).

8. Tête optique selon la revendication 7, dans laquelle l'élément de polarisation (21b) et les moyens de mise en forme (21c) sont formés d'une seule pièce (21).

9. Tête optique selon la revendication 2, dans laquelle une direction d'une ligne de frontière (17e) séparant les deux régions de réception de lumière de focalisation mutuellement attenantes (17a, 17b) de l'élément de réception de lumière (17) est définie de façon à ce que ladite ligne de frontière (17e) et un axe optique de la lumière diffractée produite dans la région de diffraction de focalisation (12a) de l'élément de diffraction (12) soient compris dans le même plan.

10. Tête optique selon la revendication 2, dans laquelle des réseaux de diffraction (12e, 12f) formés respectivement dans les deux régions de diffraction de poursuite de piste (12b, 12c) de l'élément de diffraction (12) sont inclinés dans des directions mutuellement opposées par rapport à la ligne de division (12h) s'étendant dans la direction correspondant à la direction de piste.
